# EUROPÄISCHE PATENTSCHRIFT

(11) **EP 2 223 751 B1**
(45) Veröffentlichungstag und Bekanntmachung des Hinweises auf die Patenterteilung: **28.09.2016**
(21) Anmeldenummer: 10005371.9
(22) Anmeldetag: 16.07.2004
(51) Int. Cl.: B05C 5/02

(54) **Verfahren zum Erkennen einer auf einem Substrat aufzubringenden Struktur mit mehreren Kameras sowie eine Vorrichtung hierfür**
Method and device for identifying a structure applied to a substrate using a plurality of cameras.
Méthode pour reconnaître une structure appliqué sur un substrat avec une pluralité de caméras et un appareil pour executer ladite methode.

(30) Priorität: 23.12.2003 DE 10361018
(43) Veröffentlichungstag der Anmeldung: 01.09.2010
(62) Teilanmeldung aus: 04741093.1
(73) Patentinhaber: QUISS GMBH, 82178 Puchheim (DE)
(72) Erfinder: Tomtschko, Andreas, 74189 Weinsberg (DE); Berger, Mirko, 80339 München (DE); Linnekohl, Jan, 64625 Bensheim (DE); Raab, Roman, 81827 München (DE)
(74) Vertreter: Ascherl, Andreas

(56) Entgegenhaltungen:
- WO-A1-02/26397
- FR-A- 2 817 618
- US-A- 4 724 302
- US-A- 5 402 351
- US-A1- 2002 113 198

## Beschreibung

Die vorliegende Erfindung betrifft ein Verfahren zum automatischen Aufbringen und Überwachen einer auf einem Substrat aufzubringenden Struktur sowie eine entsprechende Vorrichtung hierfür.

Herkömmlicherweise werden bislang zum Erkennen einer auf einem Substrat aufzubringenden Struktur optische Vermessungen durchgeführt, wobei häufig verschiedene Systeme zur vollautomatischen Prüfung der Struktur, u. a. Klebstoff und Dichtmittelraupen, verwendet werden. Hierzu werden mehrere Videokameras auf die zu erkennende Struktur gerichtet, wobei zusätzlich ein Beleuchtungsmodul erforderlich ist, das zur Erzeugung eines kontrastreichen Kamerabildes dient.

Um eine Kleberraupe bzw. Kleberspur beim Auftragen überwachen zu können, ist es erforderlich, dass eine Referenzkleberspur eingelernt wird, d. h. von der Kamera bzw. den Kameras abgefahren wird, um daraus entsprechende Parameter zu berechnen, nach denen die aufgebrachten Kleberspuren daraufhin bewertet werden.

Jedoch werden einzelne Bauteile nicht stets in der gleichen Position mittels der Fördertechnik zu der Auftragseinrichtung bzw. zur Vorrichtung zum automatischen Aufbringen und Überwachen zugeführt. Ferner ist es bei dem Aufbringen einer Klebstoffspur auf den Falz oder eine Fügenaht erforderlich, dass die vorgegebenen Toleranzen der einzelnen Bauteile bzw. der Lage der einzelnen Fügenähte bzw. Falze korrigiert werden.

Dokument US 2002/0113198 offenbart ein Verfahren und eine Vorrichtung gemäß die erste Teilen der Ansprüchen 1 und 8.

Darüber hinaus besteht Bedarf nach einem Verfahren zum automatischen Aufbringen und Überwachen einer auf einem Substrat aufzubringenden Struktur, vorzugsweise eine Kleberraupe oder Klebstoffspur, wobei die Auftragsstruktur bzw. Klebstoffspur mit hoher Genauigkeit während des Auftragens überwacht wird.

Somit ist es Aufgabe der vorliegenden Erfindung, ein Verfahren zum automatischen Aufbringen und Überwachen einer auf einem Substrat aufzubringenden Struktur bereit zu stellen, wobei die Auftragsstruktur bzw. Kleberspur mit hoher Genauigkeit während des Auftragens überwacht wird, und wobei eine automatische Führung der Auftragseinrichtung bzw. eine Positionskorrektur in bezug auf Lagetoleranzen der einzelnen Bauteile bzw. der Toleranzen von Fugenähten oder ähnlichem ermöglicht wird.

Ferner ist es Aufgabe der vorliegenden Erfindung eine geeignete Vorrichtung zur Durchführung des erfindungsgemässen Verfahrens bereit zu stellen.

Diese Aufgaben werden verfahrenstechnisch mit den Merkmalen von Anspruch 1 sowie vorrichtungstechnisch mit den Merkmalen von Anspruch 8 gelöst.

Gemäss der Erfindung wird ein Verfahren zum automatischen Aufbringen und Überwachen einer Klebstoffspur auf ein Substrat bzw. Bauteil, insbesondere einen Falz oder einer Fügenaht, vorgeschlagen, wobei eine Referenzkante bzw. Referenznaht von einer ersten Kamera in Vorlaufrichtung der Auftragseinrichtung ermittelt wird, um die Auftragseinrichtung gemäss der Referenzkante bezüglich der aufgenommenen Bildern der ersten Kamera zu steuern bzw. zu regeln. Gleichzeitig bzw. unmittelbar nach dem Aufbringen der Klebstoffspur auf das Substrat bzw. den Falz oder Stoss der Bauteile wird eine Online-Überwachung der aufgebrachten Klebstoffspur in Nachlaufrichtung von einer zweiten Kamera vorgenommen, d. h. die Klebstoffspur wird auf das Substrat aufgebracht und daraufhin überprüft die zweite Kamera die Qualität der soeben aufgebrachten Klebstoffspur. Erfindungsgemäss ermöglicht dies gleichzeitig eine Nahtführung für zwei zu verklebenden Bauteile sowie eine Online-Überwachung des Klebstoffauftrags bzw. Dichtmittelauftrags. Somit wird eine Reduzierung des aufgebrachten Dichtmittels erreicht, da aufgrund der Nahtführung und gleichzeitigen Kontrolle lediglich ein geringer Materialaufwand aufgrund des Toleranzausgleichs erforderlich ist. Insbesondere wird es durch zumindest drei Kameras um die Auftragseinrichtung ermöglicht, welche jeweils einen Überlappungsbereicht zu den beiden benachbarten Kameras aufweisen, dass unabhängig von dem Verfahrweg der Auftragseinrichtung der Klebstoffauftrag in Nachlaufrichtung überprüft werden kann und gleichzeitig stets zumindest eine Kamera die Referenzkontur in Vorlaufrichtung ermitteln kann. Dadurch entsteht ein sogenannter Rundumblick um die Auftragseinrichtung durch die zumindest drei Kameras, so dass die Nahtführung und die Überprüfung sowie Regelung des Klebstoffauftrags vereinfacht wird, wobei insbesondere jede Kamera sowohl für die Regelung in Vorlaufrichtung gemäß der Referenzkontur als auch für die Überwachung der aufgebrachten Struktur in Nachlaufrichtung verwendbar ist.

Weitere vorteilhafte Ausgestaltungen ergeben sich aus den Unteransprüchen. So ist es für eine dreidimensionale Positionskorrektur in bezug auf Lagetoleranzen der einzelnen Bauteile bzw. Toleranzen von Fügenähten vorteilhaft, wenn die Referenzkontur bzw. ein Merkmal von zumindest zwei Kameras ermittelt wird, um eine dreidimensionale Positionskorrektur für die Auftragseinrichtung mit Hilfe des Stereometrieverfahrens durchzuführen.

Ferner ist es von Vorteil, wenn die beiden Kameras das Substrat, einen Bauteilabschnitt oder ein oder mehrere Bauteile als Vollbild oder Grossbild aufnehmen, wobei die Vollbilder oder Grossbilder der beiden Kameras einen Überlappungsbereich in Vorlaufrichtung aufweisen, und wobei die sich im Überlappungsbereich ergebende dreidimensionale Lageerkennung der Referenzkontur zur Grobjustierung der Auftragseinrichtung vor dem Aufbringen der Struktur verwendet wird. Dabei wird der Auftragseinrichtung bzw. dem Roboter entsprechende Korrekturwerte übermittelt um dessen Koordinatensystem für den Klebstoffauftrag zu verschieben.

Wenn eine Projektion zur dreidimensionalen Auswertung auf den Bereich der Referenzkontur aufgebracht wird, insbesondere wenn eine oder mehrere LED- oder Laserlinien als Projektion auf das Substrat aufgebracht werden, dann kann eine dreidimensionale Profilauswertung hinsichtlich der Höhe und der Kontur von beliebigen Bauteilen ermöglicht werden, auch wenn diese für eine übliche Bildbearbeitung ohne zusätzliche Projektion nicht auswertbar ist.

Darüber hinaus ist es besonders vorteilhaft, wenn die Referenzkontur von nur einer ersten Kamera in Vorlaufrichtung zur Regelung des Verlaufs der aufzubringenden Struktur gemäss der Referenzkontur ermittelt wird, und wobei von der ersten Kamera lediglich ein Streifen des Bildes zur Online-Regelung des Auftragens der Kleberstruktur aufgenommen wird. Durch diesen PartialScan bzw. ein teilweises Auslesen des Bildaufnahmechips müssen nur geringe Datenströme verarbeitet werden, so dass die Bildaufnahmefrequenz um ein vielfaches erhöht werden kann. Dabei erfolgen die Bildaufnahmen in definierten festen Zeitabständen und sind unabhängig von der Geschwindigkeit der Auftragseinrichtung bzw. der Robotergeschwindigkeit.

Wenn von der zweiten Kamera lediglich ein Streifen des Bildes zur Online-Überwachung der aufgebrachten Struktur verwendet wird, kann sowohl der Klebstoffauftrag mit hoher Geschwindigkeit als auch die Nahtführung mit hoher Geschwindigkeit Online erfolgen, da beide Kameras eine hochfrequente Bildaufnahme und eine schnelle Auswertung mit nur einem Sensor mit zwei Kameras ermöglichen. Dabei wird parallel zur Online-Inspektion der aufgetragenen Dichtmittelspur im Vorlauf eine Referenzkante ermittelt und die Differenzwerte dem Roboter zur Korrektur der Bahn weitergeleitet, so dass die Genauigkeit des Dichtmittelauftrags wesentlich erhöht werden kann und eine Materialreduzierung erzielt wird. Durch dieses nur teilweise Auslesen des Bildaufnahmechips der einzelnen Kameras können synchron und parallel von allen Kameras gleichzeitig bei hoher Bildaufnahmerate Bilder erfasst werden.

Gemäss einer vorteilhaften Ausführungsform, werden die Streifen der Bilder der Kameras unter Bildung einer einzigen Bildsequenz aufgenommen und wobei die Bildaufnahmefrequenz entsprechend der Datenverminderung durch die Aufnahme von lediglich einem Streifen des Bildes erhöht wird, um die Geschwindigkeit der automatischen Aufbringung und Überwachung des Dichtmittelauftrags zu erhöhen. Durch die Speicherung einer einzigen Bildsequenz für alle Kameras können die jeweiligen Bilder der einzelnen Kameras ortsabhängig gemäss dem Verfahren der Auftragseinrichtung entsprechend zugeordnet werden.

Wenn jede Kamera nur einen Teil, insbesondere in etwa ein Drittel, Viertel oder Fünftel, der Bildzeilen als Streifen des Bildes verwendet, wird die Bildaufnahmefrequenz entsprechend vervielfacht, insbesondere im wesentlichen verdreifacht, vervierfacht oder verfünffacht.

Ferner ist es von Vorteil, wenn eine Parametrierung und eine Aufnahme der Auftragsbahn in einem einzigen Bildaufnahmelauf erfolgt, wobei die Bilder aller Kameras in einer Bildsequenz gespeichert werden.

Die gespeicherte Bildsequenz verwendet erfindungsgemäss für die Parametrierung den Roboterverfahrweg und/oder die Roboterverfahrzeit oder die Roboterkoordinaten, die Position, den Kontrast, den Grauwert oder Farbwert, die Breite und Güte der aufgetragenen Struktur.

Durch die geringen zu verrechnenden Daten können aufgrund der hohen Bildaufnahmefrequenz vergleichsweise kurze Teilabschnitte des Dichtmittelauftrags und auch der Referenzkontur bzw. Fügenaht aufgenommen werden, die beispielsweise zwischen 1 mm und 3 mm liegen. Des weiteren ist es von Vorteil, wenn die aufzubringende Struktur durch die Parametrierung im wesentlichen in einer Vektorkette abgelegt wird, wobei eine hohe Bildaufnahmefrequenz und kurze Teilabschnitte von im wesentlichen zwischen 0,5 mm und 4 mm, insbesondere 1 und 3 mm vorgenommen werden. Die Vektorisierung hat den Vorteil, dass die Klebstoffspur in Form einer Vektorkette in eine kameraübergreifenden, globalen Koordinatensystem abgelegt werden kann. Im Gegensatz dazu, wird herkömmlicherweise lediglich ein lokales kamerabildbezogenes Koordinatensystem bisher verwendet. Erfindungsgemäss ist es dadurch möglich, dass nach einem Tausch des Sensorkopfs lediglich eine Rekalibrierung bzw. Neukalibrierung erfolgen muss, ohne dass die Klebstoffspur neu eingelernt werden muss.

Gemäss einer weiteren Ausführungsform ist es vorteilhaft, wenn drei Kameras verwendet werden, wobei jede Kamera sowohl für die Regelung in Vorlaufrichtung gemäss der Referenzkontur als auch für die Überwachung der aufgetragenen Struktur in Nachlaufrichtung verwendet wird, bzw. verwendet werden kann, wobei die drei Kameras jeweils einen Überlappungsbereich zur benachbarten Kamera auf einer Kreisbahn aufweisen. Als Folge davon, kann ein Sensor mit drei Kameras fest an der Auftragseinrichtung angebracht werden, da jede einzelne Kamera sowohl die Regelung der Nahtführung als auch die Online-Überwachung des Dichtmittelauftrags übernehmen kann. Vorteilhafterweise bilden die Winkelwerte der Kreisbahn von 0 bis 360° ein globales Koordinatensystem, wobei den Bildern der einzelnen Kameras ein Segment der Kreisbahn zugeordnet wird, um auf dieser Kreisbahn entweder die Nahtführung oder die Dichtmittelüberwachung durchzuführen. Folglich sind dabei von den drei Kameras jeweils zwei für die Auswertung aktiv, nämlich eine für die Nahtführung und eine andere für die Überwachung des Dichtmittelauftrags.

Ein weiterer Vorteil besteht darin, dass bei dem Verlauf der Referenzkontur oder der Kleberspur von einer Kamera zur nächsten Kamera automatisch umgeschaltet wird, d. h., dass die Aktivierung von der einen Kamera auf die andere Kamera übergeben wird, wenn der Verlauf der Auftragsstruktur oder der Referenzkontur von dem Segment der Kreisbahn einer Kamera über den Überlappungsbereich in das Segment der Kreisbahn einer anderen Kamera überwechselt.

Dadurch dass die Bildaufnahmen sehr kurz hintereinander stehen (jeweils alle 0,5 bis 4, insbesondere 1 bis 3 mm), kann man davon ausgehen, dass sich die Lage der Klebstoffspur bzw. der Fügekante nicht zu stark ändern kann, was den Informationsgehalt bzw. die Zuverlässigkeit des A-Priori-Wissens deutlich erhöht, so dass vorauszusehen ist, wo die Spur liegen wird. Ein positiver Effekt davon ist, dass auch ohne Expertenwissen eines Menschen der Rechner vollautomatisch die Lage der Spur erkennen kann, da diesem bereits bekannt ist, wo die Spur im nächsten Bild ungefähr verlaufen wird. Dadurch kann der Suchbereich eingeschränkt und die Auswertegeschwindigkeit erhöht werden.

Erfindungsgemäss ist eine Vorrichtung zum automatischen Aufbringen und Überwachen einer auf einem Substrat aufzubringenden Struktur, vorzugsweise Kleberraupe oder Kleberspur, zur Durchführung des erfindungsgemässen Verfahrens vorgesehen, wobei zumindest ein Beleuchtungsmodul und eine Sensoreinheit vorgesehen ist, und wobei die Sensoreinheit aus zumindest zwei Kameras aufgebaut ist, welche um eine Auftragseinrichtung zum Auftragen der auf dem Substrat aufzubringenden Struktur vorgesehen sind und an dieser derart angeordnet sind, dass zumindest eine Kamera in Vorlaufrichtung zur Regelung der Auftragseinrichtung mittels einer Referenzkontur und zumindest eine Kamera in Nachlaufrichtung zur gleichzeitigen Online-Überwachung der auf dem Substrat aufgebrachten Struktur vorgesehen ist. Mit Hilfe der erfindungsgemässen Vorrichtung kann somit beispielsweise eine Nahtführung als Referenzkontur für die Steuerung der Auftragseinrichtung bzw. Roboterführung und gleichzeitig eine Online-Kontrolle des Dichtmittelauftrags vorgenommen werden, so dass es aufgrund der Nahtführung zu einer Materialreduzierung des Dichtmittelauftrags kommt, da die Breite der Klebstoffspur aufgrund der Führung der Auftragseinrichtung verringert werden kann.

Wenn sich die optischen Achsen der einzelnen Kameras in Blickrichtung im wesentlichen mit der axialen Längsachse der Auftragseinrichtung schneidet oder die optischen Achsen der einzelnen Kameras parallel zueinander ausgerichtet sind, und insbesondere senkrecht auf das Substrat ausgerichtet sind, so ist es gemäss einer derartigen Weiterbildung vorteilhaft, dass ein enger Bereich um die Auftragseinrichtung mit geeigneter Auflösung und hoher Bildaufnahmefrequenz überwacht werden kann.

Gemäss einer bevorzugten Ausführungsform sind einzelne Kameras, insbesondere 3 Kameras, in Umfangsrichtung in jeweils gleichem Abstand voneinander angeordnet.

Vorteilhafterweise werden die einzelnen Kameras derart zusammenwirken, dass die Bilder der Kameras in einer Bildsequenz gespeichert werden, wobei diese Bilder softwareseitig aus den drei synchron aufgenommenen und parallel eingezogenen Teilabschnitten der einzelnen Kameras zusammengesetzt sind.

Wenn eine Projektionseinrichtung an der Auftragseinrichtung vorgesehen ist, welche einen oder mehrere Merkmale, insbesondere Streifen, auf das Substrat für die dreidimensionale Auswertung projiziert, dann können beliebige Bauteile für eine Korrektur bzw. Justierung der Auftragseinrichtung vor dem Aufbringen der Struktur verwendet werden.

Gemäss einer bevorzugten Ausführungsform sendet die Projektionseinrichtung eine oder mehrere LED- oder Laserlinien zur dreidimensionalen Profilauswertung aus. Wenn zumindest zwei Projektionseinrichtungen rund um die Auftragseinrichtung angeordnet sind, dann wird eine lückenlose dreidimensionale Auswertung um die Auftragseinrichtung ermöglicht, wobei die Auswertung von Dichtmittelhöhe und Dichtmittelkontur sowie Lage und Breite nach dem Triangulationsprinzip mittels Bildverarbeitung vorgenommen werden kann.

Gemäss einer Ausgestaltung einer Erfindung sind die Kameras derart um die Auftragseinrichtung angeordnet, dass zumindest eine im wesentlichen kreisförmige Kantenantastung, insbesondere in Form eines Kreiscalipers gebildet wird, dessen Mittelpunkt die Auftrageinrichtung der Struktur bildet. Dabei können ein oder mehrere kreisförmige Caliper verwendet werden, die es ermöglichen, dass die Ermittlung der Kante der Kleberspur auf einer Kreisbahn stattfindet.

Gemäss einer bevorzugten Ausführungsform weisen die einzelnen Kameras einen Überlappungs- bereich von jeweils 30° bis 90°, insbesondere im wesentlichen 60°, zur nächsten Kamera auf. Dieser Überlappungsbereich ermöglicht ein vollautomatisches Umschalten von benachbarten Kameras, wenn die Klebstoffspur von dem Überwachungsbereich einer Kamera in den nächsten verläuft, da die Auswahl der Kamera nicht gebunden an die Roboterposition oder eine zeitliche Komponente gebunden ist, sondern sich auf die aktuellen Inspektionsergebnisse bezieht, d. h. auf der Anordnung auf der Kreisbahn des Kreiscalipers bzw. auf dem dadurch gebildeten globalen Koordinatensystem.

Ferner ist es von Vorteil, wenn das Beleuchtungsmodul aus LEDs, insbesondere Infrarot-LEDs, UV-LEDs oder RGB-LEDs aufgebaut ist.

Darüber hinaus ist es von Vorteil, wenn zur Kalibrierung der einzelnen Kameras für die Zuordnung der Winkelzugehörigkeit eine Kalibrierscheibe mit einzelnen Formelementen verwendet wird, wobei diese Formelemente insbesondere einen Winkelabstand von im wesentlichem 10 aufweisen. Dadurch kann der Skalierungsfaktor, die Winkeizugehörigkeit und der Mittelpunkt sowie der Radius des Suchkreises für die einzelnen Kameras zugeordnet werden. Erfindungsgemäss weist die Kalibrierscheibe zumindest drei Markierungsstellen auf, die in einem Kreisbogen der Kalibrierscheibe von im wesentlichen 0°, 120° und 240° angeordnet sind, um drei Kameras zu kalibrieren.

Weitere vorteilhafte Ausgestaltungen der Erfindung sind Gegenstand der übrigen Unteransprüche.

Anhand der nachfolgenden Zeichnungen werden beispielhaft vorteilhafte Ausgestaltungen der Erfindung dargestellt.
Figur 1 zeigt eine schematische Seitenansicht einer erfindungsgemässen Vorrichtung zum Auftragen und Überwachen einer Klebstoffspur.
Figur 2 zeigt eine perspektivische Ansicht der erfindungsgemässen Vorrichtung von Figur 1.
Figur 3 zeigt den Verfahrweg der erfindungsgemässen Vorrichtung zum Aufbringen und Überwachen einer Klebstoffspur.
Figur 4 zeigt einen anderen Verfahrweg der erfindungsgemässen Vorrichtung bzgl. des Umschaltens der relevanten Kameras.
Figur 5 ist eine Darstellung eines einzigen Bildes, das aus drei Bildstreifen von drei Kameras zur Nahtführung und Online-Überwachung des Dichtmittelauftrags an einer Bauteilkante zusammengesetzt ist.
Figur 6 ist eine weitere Darstellung eines einzigen Bildes, das aus drei Bildstreifen von drei Kameras zusammengesetzt ist, wobei zwei überlappende Bauteile verklebt werden.
Figur 7 zeigt schematisch eine erfindungsgemässe Kalibriervorrichtung zum kalibrieren der einzelnen Kameras der erfindungsgemässen Vorrichtung zum Aufbringen und Überwachen einer auf einem Substrat aufzubringenden Struktur.
Figur 8 zeigt eine Draufsicht hinsichtlich des Grundprinzips der Nahtverfolgung.
Figur 9 zeigt eine Draufsicht hinsichtlich dem Prinzip der 3D-Lageerkennung.
Figur 10 zeigt eine Draufsicht hinsichtlich der Profilauswertung.
Figur 11 stellt eine schematische Seitenansicht der erfindungsgemässen Vorrichtung mit Projektionseinrichtung dar.
Figur 12 zeigt eine schematische Draufsicht mit einer kreisförmig aufgebrachten Projektion.

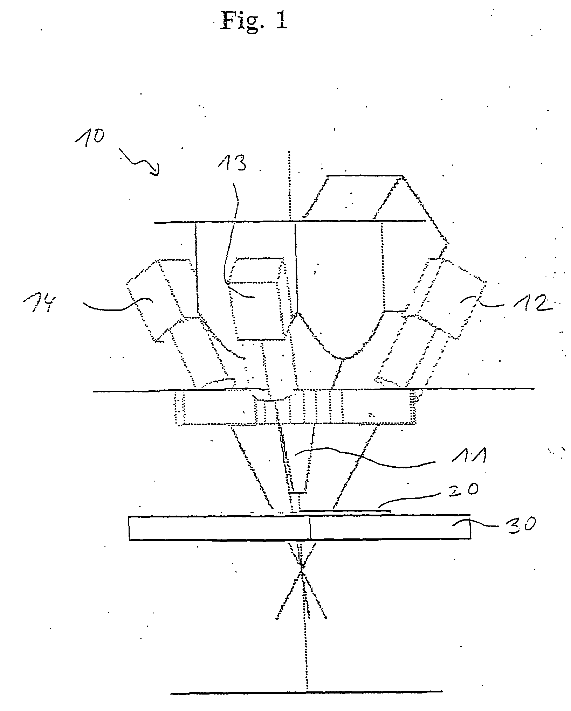

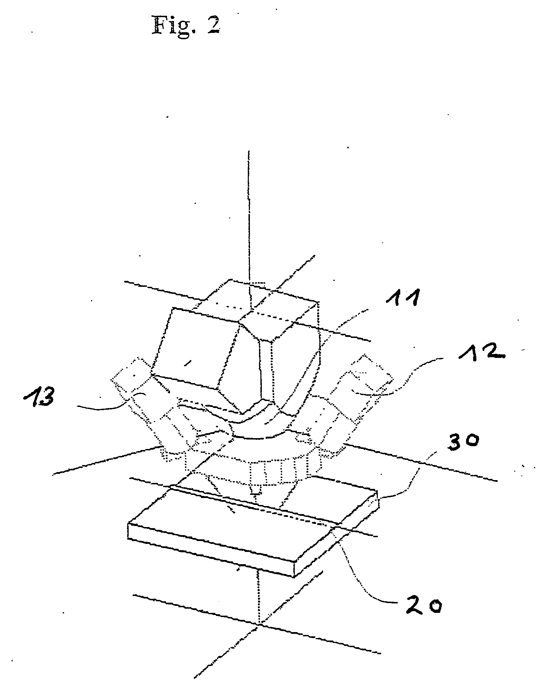

Im Weiteren wird nun der Aufbau der erfindungsgemässen Vorrichtung zum Erkennen einer auf einem Substrat aufzubringenden Struktur gemäss den Figuren 1 und 2 erläutert.

Mit dem Bezugszeichen 10 ist die schematisch dargestellte Vorrichtung zum Aufbringen und Überwachen einer Kleberspur gezeigt. Dabei ist im Zentrum der erfindungsgemässen Vorrichtung eine Auftragseinrichtung 11 angeordnet, durch welche eine Klebstoffspur 20 auf ein Substrat bzw. auf ein Blech 30 in der Fig. 1 von rechts nach links aufgebracht wird. Um die Auftragseinrichtung 11 sind in einem Kreis drei Kameras 12, 13, 14 in gleichmässigem Abstand angeordnet, die auf die Auftragseinrichtung 11 jeweils ausgerichtet sind. Wie aus Figur 1 ersichtlich, schnei- den sich die axialen Längsachsen der drei Kameras 12, 13, 14 mit der axialen Längsachse der Auftragseinrichtung 11 unmittelbar unterhalb des Substrats 30, sodass der Fokus der einzelnen Kameras unmittelbar um den Bereich der Auftragseinrichtung 11, insbesondere auf einer Kreisbahn, angeordnet ist.

Bei der Klebstoffinspektion wird nun entweder die Auftragseinrichtung mit den Kameras oder das Substrat verfahren, wobei gleichzeitig die Klebstoffspur 20 auf das Substrat 30 mittels der Auftragseinrichtung 11 aufgebracht wird und wobei die Kameras 12, 13, 14 die aufgebrachte Struktur überwachen. Es ist hierzu möglich, die Auftragseinrichtung mit den Kameras oder das Substrat zu verfahren, um die Klebstoffspur in einem gewünschten Verlauf auf dem Substrat 30 aufzubringen. Bei dem erfindungsgemässen Verfahren wird nun von einer ersten Kamera in Vorlaufrichtung, in diesem Fall nach links eine Referenzkontur bzw. Referenzlinie oder Referenzkante von Kamera 14 ermittelt, um den Verlauf der aufzubringenden Struktur gemäss der Referenzkontur zu regeln, wobei die von der ersten Kamera aufgenommenen Bilder zur Führung der Auftragseinrichtung 11 für das Auftragen der Klebstoffspur verwendet werden. Simultan zum Ermitteln der Referenzkontur wird die Klebstoffspur von der Auftragseinrichtung 11 aufgebracht, wobei die Auftragseinrichtung 11 gemäss den von der ersten Kamera ermittelten Korrekturwerten auf die entsprechende Spur bzw. den entsprechenden Klebstoffspurverlauf gebracht wird. Synchron hierzu wird die Klebstoffauftragsspur in Nachlaufrichtung von einer zweiten Kamera überwacht. Dadurch können die mitfahrenden Kameras simultan mit dem Auftragen, die Klebstoffspur unabhängig von dem Verfahrweg gemäss der Referenzkontur steuern und die Qualität der Klebstoffspur online überwachen. In Fig. 2 verläuft die Klebstoffspur 20 von links nach rechts, wobei diese als durchgezogene Linie dargestellt ist. Rechts von der Auftragseinrichtung 11 ist der gewünschte Verlauf der Klebstoffspur 20 mit gestrichelter Linie angezeigt, welcher auf dem Blech bzw. Substrat als Referenzkontur aufgebracht sein kann (beispielsweise per Laser oder als Prägung).

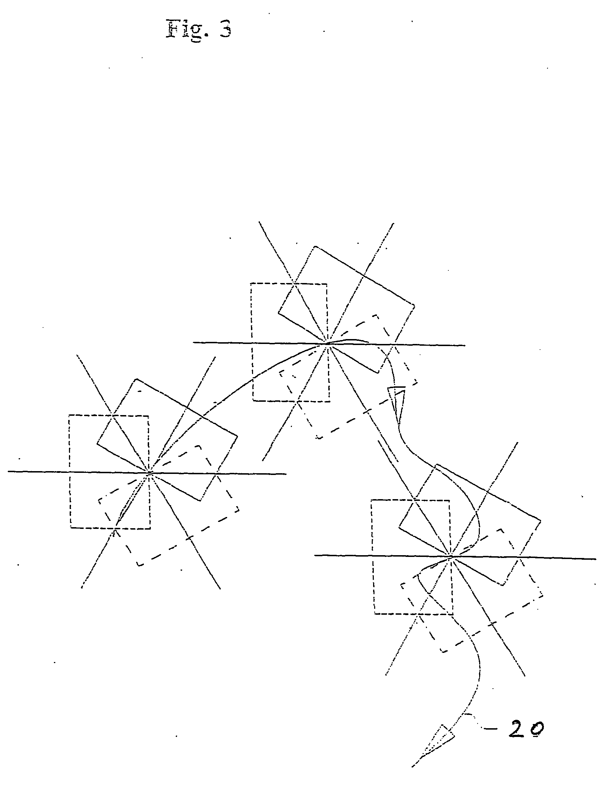

Figur 3 zeigt nun den Verlauf der Klebstoffspur 20, welcher mittels Pfeilen angezeigt wird, wobei an drei Stellen die Ausrichtung bzw. der Sichtbereich der einzelnen drei Kameras dargestellt ist. Die Sichtbereiche der einzelnen drei Kameras sind jeweils durch ein Rechteck mit durchgezogener Linie, ein Rechteck mit weit gestrichelten Linien und ein Rechteck mit eng gestrichelten Linien dargestellt. Wie aus der Figur ersichtlich bleibt die Ausrichtung der einzelnen Sichtbereiche stets konstant ausgerichtet, wobei lediglich die gesamte Vorrichtung verfahren wird.

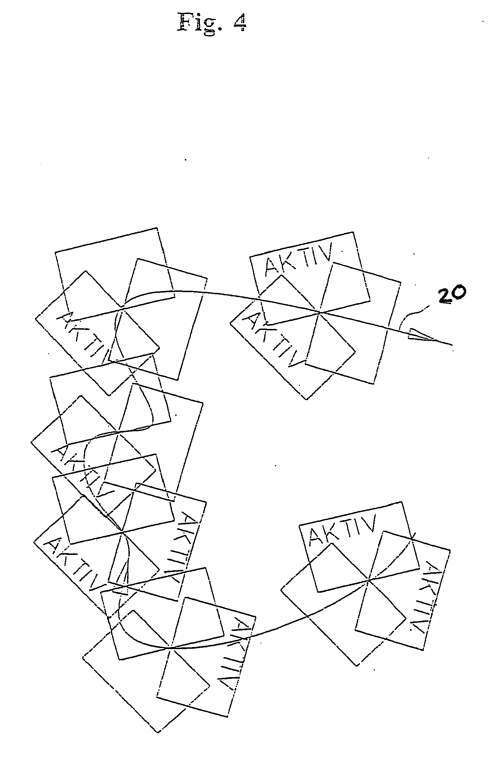

Figur 4 zeigt einen weiteren Verlauf einer Klebstoffspur 20, wobei jeweils angezeigt ist, welcher Sichtbereich aktiv ist, d. h. welche Kamera mit dem entsprechenden als Rechteck dargestellten Sichtbereich beim Abfahren der Klebstoffspur zur Qualitätskontrolle aktiv ist. Ferner ist jeweils zumindest eine zweite Kamera für die Nahtführung bzw. den Verlauf der Dichtmittelspur in Vorlaufrichtung aktiv, was jedoch aus Gründen der Übersichtlichkeit nicht dargestellt ist. Es ist jedoch ersichtlich, dass die als aktiv angezeigten Kameras in Nachlaufrichtung angeordnet sind und gemäss dem Verlauf der Klebstoffspur automatisch umgeschaltet werden. In der zur Nachlaufrichtung entgegen gesetzten Vorlaufrichtung ist daher jeweils zumindest eine Kamera für die Nahtführung und Feinjustierung der Auftragseinrichtung gemäss der vorgegebenen Referenzkontur aktiv.

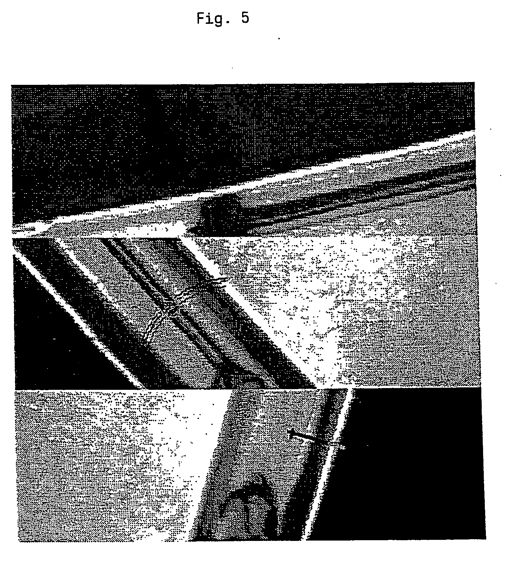

In Figur 5 sind nun drei Bildstreifen dargestellt, die jeweils einen relevanten Bildausschnitt bzw. Bildstreifen der einzelnen drei Kameras von Figur 1 darstellen. Gemäss dem erfindungsgemässen Verfahren wird von jeder Kamera lediglich ein Streifen des Bildes aufgenommen, um für eine entsprechende Datenverminderung zu sorgen, sodass die Aufnahmefrequenz erhöht werden kann. Diese einzelnen Bildstreifen der drei Kameras werden zu einem Bild zusammengefügt, wobei die Bildaufnahmen in definierten festen Zeitabständen und unabhängig von der Robotersteuerung für die Auftragseinrichtung erfolgen. Beispielsweise nehmen die Kameras lediglich einen Steifen des Bildes auf, wobei an Stelle einer Bildhöhe von 480 Bildpunkten eine Bildhöhe von rund 100 Bildpunkten (100 Bildzeilen) verwendet wird. Durch diese Partial-Scan-Technik, d. h. ein teilweises Auslesen des Bildaufnahmechips, entstehen nur geringe Datenströme, so dass die Bildaufnahmefrequenz um das entsprechende vielfache erhöht werden kann. Durch synchrone Bildaufnahme und parallelen Bildeinzug können die drei Bildstreifen untereinander zu einem einzigen Bild zusammengefügt werden. Als Folge davon sind die drei Bilder, d. h. die drei Bildstreifen, sofort hinsichtlich des Ortes und der Zeit gemäss dem Verfahrweg der Auftragseinrichtung zueinander richtig angeordnet sowie zugeordnet und können entsprechend verarbeitet werden. Diese spezielle Bildaufnahmetechnik ermöglicht somit das gleichzeitige und parallele Aufnehmen einzelner Kamerabilder, wodurch es erzielt wird, dass die Bildaufnahmefrequenz sowohl für die Führung bzw. die Regelung der Auftragseinrichtung als auch für die Online-Überwachung des aufgetragenen Klebstoffs erhöht wird, wobei die Bilder aller Kameras in einer Bildsequenz gespeichert werden.

Wenn die Bilder der drei Kameras in einer Bildsequenz gespeichert worden sind, wird beim Einlernen der Referenzkleberspur anschliessend eine Parametrierung dieser Referenzspur durchgeführt. Für die Parametrierung wird der Roboterverfahrweg, die Roboterverfahrzeit, die Richtung, die Breite und die Güte der Klebespur verwendet. Somit ergibt sich für die Kleberspur eine Art Vektorkette, wodurch es möglich ist, die hohe Bildaufnahmefrequenz und die vergleichsweise kurzen Teilabschnitte (zwischen 1 und 3 mm) zu erzielen. Die Vektorvisierung hat ferner den Vorteil, dass die Kleberspur in Form einer Vektorkette in einem kameraübergreifenden, globalem Koordinatensystem abgelegt werden kann.

Wie aus Figur 5 ersichtlich ist, welche eine Nahtführung an einer Bauteilkante darstellt, wird in dem mittleren Streifen von Figur 5 online die Nahtinspektion ausgeführt, wobei das Kreissegment den Bereich darstellt, in welchem aktuell die mittlere Kamera für die Klebstoffüberwachung sorgt.

Auftragseinrichtungen bzw. Roboter arbeiten intern mit einem Interpolationstakt von beispielsweise 12 ms. Schneller als dieser Interpolationstakt kann die Regelung der Nahtführung gemäss dem unteren Streifen von Fig. 5 nicht erfolgen. Bei einer maximalen Roboterfahrgeschwindigkeit von 700 mm/s bedeutet dies nur, dass in 12 ms ein Weg von 8,4 mm zurück gelegt wird. Wird also zum Zeitpunkt x ein Korrekturwert ermittelt, so kann die Korrektur erst mit dem nächsten Interpolationstakt erfolgen, also 8,4 mm nach Ermittlung des Wertes. Dies hat zur Folge, dass die Erfassung der Referenzkante mindestens 8,4 mm vor der Düse erfolgen muss. Dieser Bereich wird durch die Anordnung der optischen Sensorik abgedeckt und durch den schnellen Auswertezyklus (< 5 ms) werden Korrekturwerte rechtzeitig zur Verfügung gestellt. Da die Kameras ortsfest um die Auftragseinrichtung angebracht sind, verändert sich der Verlauf der Klebstoffbahn, wobei die Nahtkorrektur daher in dem ersten Streifen gemäss der ersten Kamera in den zweiten Streifen gemäss der zweiten Kamera oder in dem dritten Streifen gemäss der dritten Kamera durchgeführt werden kann. Wie bereits hinsichtlich der Online-Überwachung des Klebstoffauftrages beschrieben, wird folglich jeweils eine andere Kamera für die Nahtkorrektur aktiv, wenn die Referenznaht aus dem Sichtbereich der einen Kamera in den Sichtbereich der anderen Kamera wandert.

Der unterste Streifen von Fig. 5 zeigt auf der senkrechten Linie zur Kante des Bauteils ein helles Kreuz unmittelbar an der Bauteilkante, welches für die Nahtführung als Referenzkante verwendet wird. Parallel dazu wird in dem mittleren Streifen von Fig. 5 online die Nahtinspektion zur Überprüfung des Dichtmittelauftrags ausgeführt.

Falls die Kleberspur nun aus dem Sichtbereich einer Kamera läuft, befindet sich die Kleberspur übergangsweise im Überlappungsbereich der Winkelbereiche der beiden Kameras. Wenn nun die Kleberspur von dem Segment der Kreisbahn der einen Kamera über den Überlappungsbereich in das Segment der Kreisbahn einer anderen Kamera verläuft, wird von der einen zur anderen Kamera automatisch umgeschaltet. Dies ist insbesondere in Figur 4 durch die aktiven Sichtbereiche der einzelnen Kameras dargestellt.

Die obigen Vorteile werden dadurch erzielt, dass die einzelnen Kameras einen Kreiscaliper bilden, dessen Mittelpunkt die Auftrageinrichtung 11 bildet, wobei die Suche sowohl nach der Referenzkante als auch nach den Kanten der Klebstoffspur auf einer Kreisbahn unmittelbar um die Auftragseinrichtung erfolgt. Hierzu ist es wesentlich, dass die einzelnen Kameras auf die Auftragseinrichtung ausgerichtet sind, wobei sich die axialen Längsachsen der einzelnen Kameras mit der Längsachse der Auftragseinrichtung schneiden.

Für die erfindungsgemässe Vorrichtung ist das nicht gezeigte Beleuchtungsmodul aus LEDs, insbesondere Infrarot-LEDs, UV-LEDs oder RGB-LEDs, aufgebaut. Um möglichst geringe Bewegungsunschärfe bzw. hohe Kontraste bei der Bildaufnahme zu erhalten, können die LEDs geblitzt werden, d. h., dass kurze, starke Stromimpulse auf die Dioden im Bereich von 1,0 bis 0,01 ms aufgebracht werden. Dabei sind insbesondere derartige Leuchtdioden vorteilhaft, die verschiedenfarbiges Licht emittieren können, sodass der Sensoraufbau ohne Umbauten auf andere Klebertypen bzw. Kleberfarben umgestellt werden kann.

Im Folgenden wird nun eine Teach-In-Lauf bzw. ein Einlernen einer Referenzkleberspur erläutert.

Der Einlernvorgang der Referenzkleberspur kann durch Markieren der Spur vom Bediener begonnen werden, wodurch die Lage der Kleberspur angezeigt wird. Dies ist ausreichend, um in den nächsten Kamerabildern die Position und Richtung der Kleberspur voll automatisch zu erkennen, da die Bildaufnahmefrequenz entsprechend hoch ist und die einzelnen Bildaufnahmen sehr kurz hintereinander stattfinden, beispielsweise alle 1 mm bis 3 mm. Ab dem Startpunkt findet Bild für Bild die Kleberantastung statt, wobei die im aktuellen Bild gefundene Kleberspurposition und Kleberspurwinkel als A-Priori-Wissen für das kommende Bild verwendet wird. Somit wird das vollautomatische Erfassen der Kleberspur möglich, ohne dass ein Mensch das Bild bzw. die Lage der Kleberspur ermitteln bzw. bewerten muss. Als Folge davon kann der Suchbereich eingeschränkt bzw. angepasst werden.

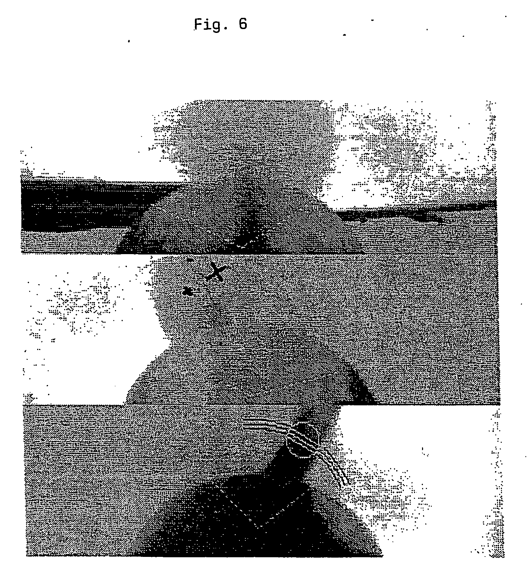

In Figur 6 ist eine Nahtführung im Überlappungsbereich von zwei Bauteilen insbesondere an einem Stoss von zwei Bauteilen dargestellt. Die zweite Kamera zeigt den gemäss den Partial-Scanverfahren ausgelesenen Streifen der zweiten Kamera, in welchem die Position der Überlappung der beiden Bleche zur Nahtführung als Refernzkontur bzw. Referenzkante ermittelt wird. Im untersten Streifen von Fig. 6 ist der Streifen der dritten Kamera dargestellt, in welchem parallel zur Nahtführung die aufgetragene Dichtmittelspur ausgewertet wird. Hierzu ist das Kreissegment in dem untersten Streifen dargestellt, in dessen Mitte die Kleberspur verläuft, was durch einen Kreis angezeigt ist. In dem obersten Streifen von Fig. 6 ist der Bildaufnahmestreifen der ersten Kamera dargestellt.

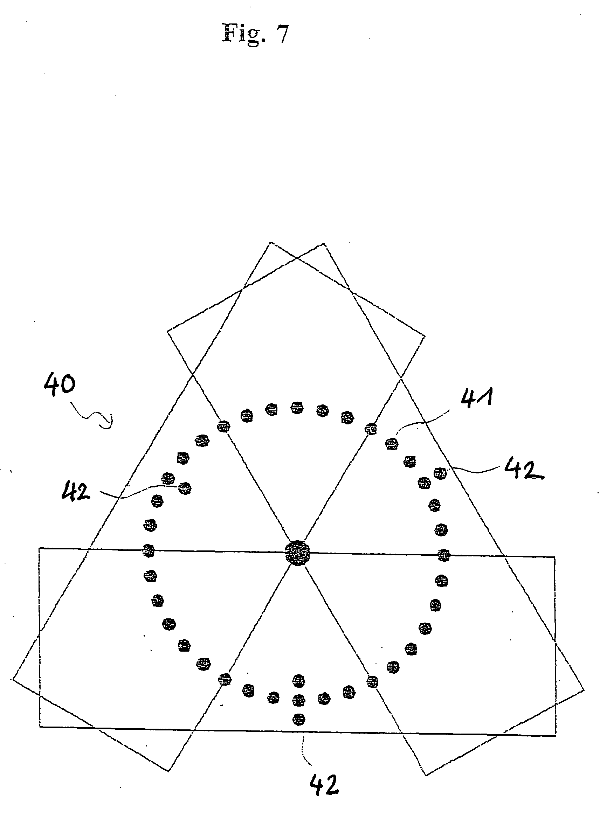

Figur 7 zeigt eine Kalibriereinrichtung 40 in Form einer kreisförmigen Kalibrierscheibe, um den einzelnen Kameras ihren Skalierungsfaktor, ihre Winkelzugehörigkeit und den Mittelpunkt sowie den Radius des Suchkreises zuzuordnen. Die Kalibrierscheibe besteht aus einzelnen auf einer Kreisbahn angeordneten Formelementen bzw. Dots 41, die jeweils in einem Winkelabstand von im wesentlichen 10° angeordnet sind. In gleichmässigen Abstand voneinander sind ferner Markierungsstellen 42 angeordnet, um drei Kameras zu kalibrieren. Mittels einer Ausgleichsrechnung wird aus den Koordinaten der Mittelpunkte der einzelnen Dots zum einen der Skalierungsfaktor der einzelnen Kameras zum anderen der Mittelpunkt sowie der Radius des Suchbereichs be- rechnet. Durch die Markierungsstellen im Winkel von 0°, 120°, 240° im globalem Koordinatensystem kann die Winkelzuordnung und der jeweilige Sichtbereich der einzelnen Kameras bestimmt werden. Der Sichtbereich der einzelnen Kameras ist insbesondere durch die drei Rechtecke in Figur 7 dargestellt, wobei die Formelemente 41 der Kreisbahn des Kreiscalipers zur Erfassung der Klebstoffspur entsprechen können.

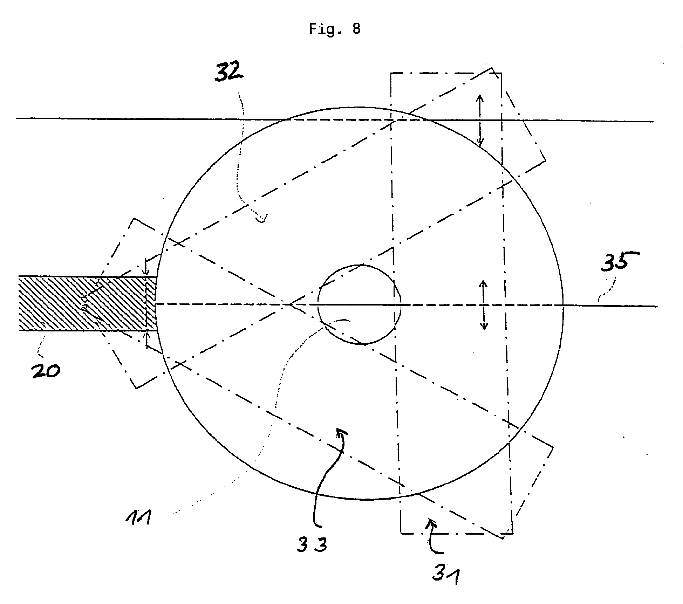

Um die Auftragseinrichtung 11 sind in Fig. 8 jeweils in Strichpunktlinie drei Streifen um die Auftragseinrichtung dargestellt, welche den Auslesebereich für den Partial-Scan der einzelnen Kameras darstellen. Der Streifen 31 der ersten Kamera ermittelt die Referenzkante 35, um die Auftragseinrichtung gemäss dem Verlauf der Referenzkante entsprechend zu steuern bzw. zu regeln. Bildstreifen 31 ist daher in Vorlaufrichtung ausgerichtet und vermisst die Lage der Referenzkante bzw. des Falzes 35, so dass die Auftragseinrichtung 11 das Dichtmittel auf die gemäss der Referenzkontur 35 korrigierte Bahn aufträgt. Nach Korrektur der Roboterbahn bzgl. der Karossenpositionierung erfolgt die Fügenahterkennung durch Anfahren der ersten Position und Aktivierung der Nahtführung. Die Roboterbahn erhält nach Freigabe des Ablaufes (Naht wird erkannt) kontinuierlich Korrekturwerte senkrecht zur eingelernten Auftragsrichtung. Dabei kann der Fangbereich 15mm betragen und wobei der Regelbereich < als ±1 mm ist. Die Kommunikation zwischen dem Bildverarbeitungssystem und der Robotik bzw. Auftragseinrichtung erfolgt beispielsweise durch eine normierte Ethernet-Schnittstelle mittels XML-Protokoll. In Nachlaufrichtung sind die beiden Bildstreifen 32 und 33 gezeigt, welche sich im Bereich der Dichtmittelspur 20 schneiden.

Die Onlineüberwachung einer aufgebrachten Klebstoffspur wird nun kurz erläutert. Die in Figur 1 gezeigte Auftragseinrichtung 11 bringt die Klebstoffspur auf das Blech 30 auf, wobei die Auftragseinrichtung 11 mit den Kameras über dem Blech 30 verfahren wird und gemäss der Referenzkontur geregelt wird. Jedoch ist auch eine kinematische Umkehr möglich, d. h., dass das Blech 30 verfahren wird und die Auftragseinrichtung mit den Kameras ortsfest angeordnet ist. Die aufgetragene Klebstoffspur 20 wird von einer der Kameras 12, 13, 14 auf der gemäss Figur 5 erläuterten Kreisbahn des Kreiscalipers ermittelt und ausgewertet, wobei von jeder Kamera jeweils lediglich ein Streifen des Bildes aufgenommen wird und in einem einzigen Bild zusammengefügt wird. Entsprechend der Datenverminderung durch die Aufnahme von lediglich einem Streifen des Bildes jeder Kamera wird die Bildaufnahmefrequenz erhöht, wobei die einzelnen Bildstreifen in dem zusammengefügten Bild das synchrone und parallele sowie gleichzeitige Erfassen der drei Kamerabilder ermöglichen und wobei die einzelnen Bilder der drei Kameras unmittelbar ortsabhängig zugeordnet werden können. Somit wird eine Nahtführung und Onlineüberprüfung der Klebstoffspur in Echtzeiten möglich, welche durch die hohe Bildaufnahmefrequenz sowohl bei Regelung gemäss der Referenzkante als auch beim Überprüfen der aufgebrachten Kleberspur eine hohe Genauigkeit bei hohen Verfahrgeschwindigkeiten erzielt.

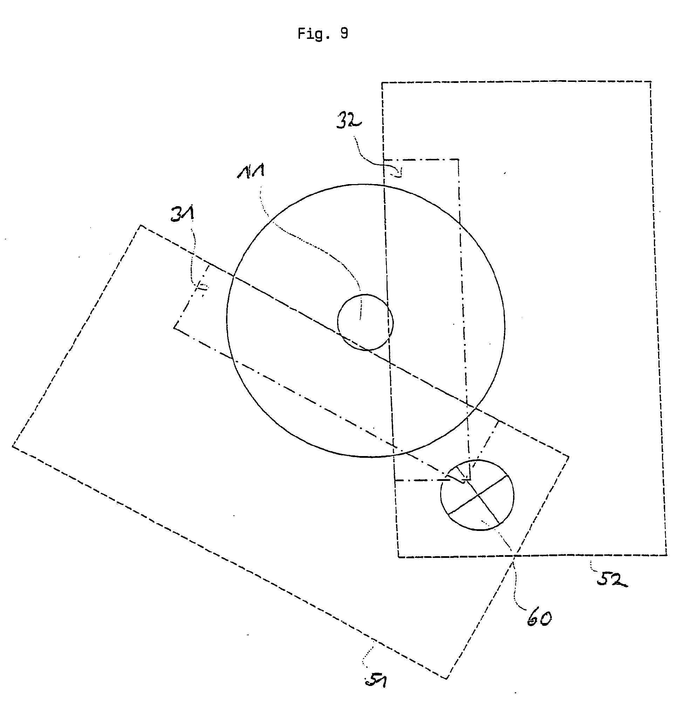

Fig. 9 zeigt nun das Grundprinzip der 3D-Lageerkennung, welche vor dem Dichtmittelauftrag erfolgt. Da die Bleche, beispielsweise Rohkarossen von Fahrzeugen, von der Fördertechnik nicht stets in der gleichen Position positioniert werden und die Lage der Fügenähte toleranzbehaftet ist, erweist sich eine Grobjustierung bzw. Grobpositionierung der erfindungsgemässen Vorrichtung als vorteilhaft. Hierzu werden die Kamerabildfelder auf Grossbild bzw. Standardgrösse oder Vollbild umgestellt, was jeweils durch die gestrichelte Linie 51 bzw. 52 dargestellt ist. Das Standardkamerabildfeld 51 zeigt den erweiterten Sichtbereich einer Kamera, welche nach dem partial-scan Verfahren lediglich den entsprechenden Streifen 31 ausliest. Analog hierzu ist der Streifen 32 im Verhältnis zu dem Standardkamerabildfeld 52 verkleinert. Beispielsweise wird der Bildstreifen 31 bzw. 32 mit Hilfe einer geeigneten Software auf beispielsweise die halbe Breite und 1/5 der Höhe verkleinert. Aus Gründen der Übersichtlichkeit ist das entsprechende Standardkamerabildfeld 53 mit dem entsprechenden Bildstreifen 33 weggelassen worden. Bei der 3D-Lageerkennung wird ein beliebiges Merkmal 60 vermessen, welches sich in dem überlappenden Sichtbereich der beiden Kamerabildfelder 51 und 52 befindet. Da sich die beiden Kamerabildfelder 51 und 52 in dem Bereich des Merkmals 60 überlappen, kann das Verfahren der Stereometrie verwendet werden, um eine dreidimensionale Auswertung, beispielsweise eines Loches oder einer Bauteilkante zu ermöglichen. Wenn beispielsweise eine Naht von zwei Bauteilen erkannt worden ist, so kann die Auftragsvorrichtung mit Hilfe der optischen Sensorik eine automatische Positionskorrektur vornehmen, um daraufhin die Bahnkorrektur der Roboterbahn bzw. Auftragseinrichtungsbahn online vorzunehmen, wie in Fig. 8 beschrieben. Gleichzeitig kann die identische Sensorik online die Qualitätskontrolle der Nahtabdichtung durchführen wie ebenso gemäss Fig. 8 beschrieben. Somit ist für eine Positionskorrektur der Auftragseinrichtung und die Onlineregelung der Verlaufsbahn der Auftragseinrichtung sowie die Onlineüberwachung des Dichtmittelauftrags mit einer einzigen Sensorik möglich, weiche beispielsweise aus drei Kameras aufgebaut ist, die um die Auftragseinrichtung ortsfest angebracht sind. Dabei wird erfindungsgemäss lediglich ein Streifen des Bildes 31, 32, 33 aufgenommen, um geringe Datenströme zur Bildaufnahmefrequenzerhöhung zu verwenden. Der Einsatz der partial-scan Technik ermöglicht so beispielsweise eine Bildwiederholrate von in etwa 240 Hz oder niedriger. Die Aufnahmen erfolgen also in definierten festen Zeitabständen und sind unabhängig von der Robotergeschwindigkeit bzw. Auftragseinrichtungsgeschwindigkeit. Zusätzlich wird im Auswerterechner eine Bilderfassungskarte (Framegrabber = PC-Einsteckkarte zum Einzug von Bildern aus der Kamera) eingesetzt, die es ermöglicht, synchron und parallel von allen drei Kameras Bilder zu erfassen. Die Bilder werden anschliessend zu einem Bild (3 Streifen untereinander) zusammengefügt, was den Vorteil ermöglicht, dass jeweils drei Bilder sofort einander ortsabhängig entsprechend zugeordnet sind.

Ferner ist es insbesondere ausreichend, beispielsweise die Dichtmittelspur in einem der drei Bilder zu suchen und auszuwerten. Oberschreitet der Winkelwert einen bestimmten Betrag, so wird automatisch auf die benachbarte Kamera umgeschaltet. Der Winkelwert wird dabei auf einen Vollkreis von 360° bezogen, wodurch sich ein globales Koordinatensystem ergibt. Dabei weist jede Kamera einen Überlappungsbereich zur nächsten Kamera auf. Die Auswahl der Kamera erfolgt nicht gebunden an die Auftragseinrichtungsposition bzw. Roboterposition bzw. gebunden an eine zeitliche Komponente, sondern bezieht sich stets auf die aktuellen Inspektionsergebnisse, welche im globalen Koordinatensystem erfasst werden. Dadurch werden Fehler vermieden, welche durch die relativ ungenauen Robotersteuerungen bzw. Auftragseinrichtungssteuerungen erzeugt werden.

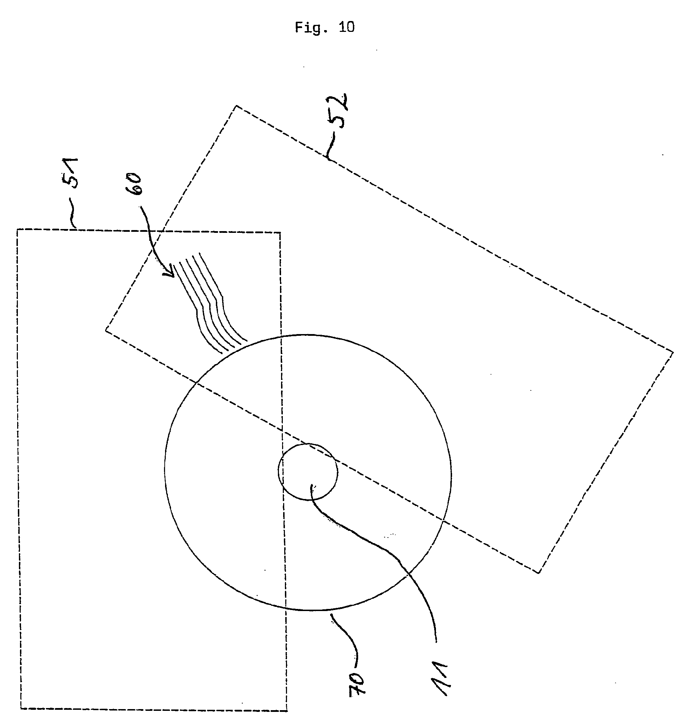

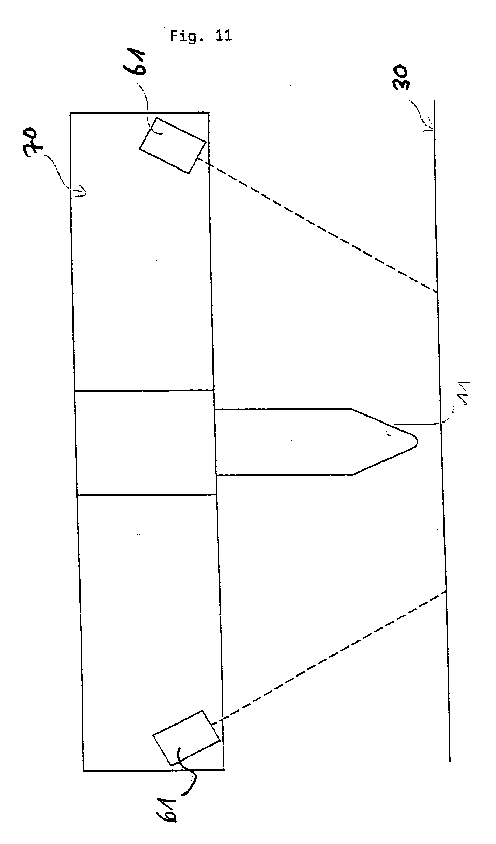

Gemäss den Figuren 10 und 11 wird nun die dreidimensionale Profilauswertung mit Hilfe einer Projektion beschrieben, um für eine Positionskorrektur der Auftragseinrichtung zu sorgen, wie bereits gemäss Figur 9 erläutert. In Fig. 10 sind aus Übersichtlichkeitsgründen wiederum nur zwei Kamerasichtfelder 51, 52 gestrichelt dargestellt. Im Überlappungsbereich der beiden Kamerasichtfelder 51, 52 sind eine Vielzahl von Laserlinien 60 dargestellt, welche zur Profilauswertung hinsichtlich der Höhe und der Kontur von Strukturraupen und auf die Erzeugung von sogenannten Softkonturen verwendet werden. Die Laserlinien 60 werden von einer Projektionseinrichtung erzeugt, welche beispielsweise an dem optischen Sensor mit drei Kameras angeordnet sein kann. Ferner kann die Projektionseinrichtung jedoch auch unmittelbar an der Auftragseinrichtung 11 angeordnet sein. Der Sensor mit den drei Kameras ist schematisch durch den Kreis 70 dargestellt. Durch die auf das Bauteil 30 bzw. Blech 30 projizierten Laserlinien bzw. Laserstreifen werden Konturen auf dem Bauteil hervorgehoben, die mit üblicher Bildverarbeitung für die dreidimensionale Auswertung nicht verwendbar sind. Mit Hilfe der Laserlinien auf dem Bauteil werden künstliche Merkmale erzeugt, die dann mittels der Bildverarbeitung gemäss der Stereometrie ausgewertet werden können. Somit zeigt Fig. 10 das Prinzip der dreidimensionalen Lageerkennung vor dem Dichtmittelauftrag, falls keine harten, auswertbaren Merkmale vorhanden sind. Im Gegensatz dazu ist in der bereits erwähnten Fig. 9 eine harte Kontur durch das Merkmal 60 beschrieben worden.

In Fig. 11 ist die Auftragseinrichtung 11 mit der daran angebrachten Sensoreinheit 70 als Seitenansicht dargestellt, wobei der Sensor 70 neben den drei Kameras beispielsweise zumindest noch zwei Projektionseinrichtungen 61 aufweisen kann, welche Laserlinien auf das Blech bzw. das Substrat 30 projizieren, wie schematisch durch die gestrichelte Linie dargestellt. Wenn mehrere Projektionseinrichtungen 61 rund um die Auftragseinrichtung angeordnet sind, kann eine lückenlose Kontur auf dem Blech 30 erzeugt werden, wodurch aufgrund der Kalibrierung von Sensor und Projektionseinrichtung die lückenlose Kontur zur dreidimensionalen Auswertung verwendet werden kann. Folglich zeigt Fig. 11 beispielhaft zwei Projektionseinrichtungen 61. Derartige Projektionseinrichtungen können beispielsweise mittels Linien eines Lasers auf das Substrat bzw. das Bauteil projizieren oder können aus einem LED-Modul aufgebaut sein, welches beispielsweise eine Vorsatzlinse zur Erzeugung einer Linie auf dem Substrat umfasst.

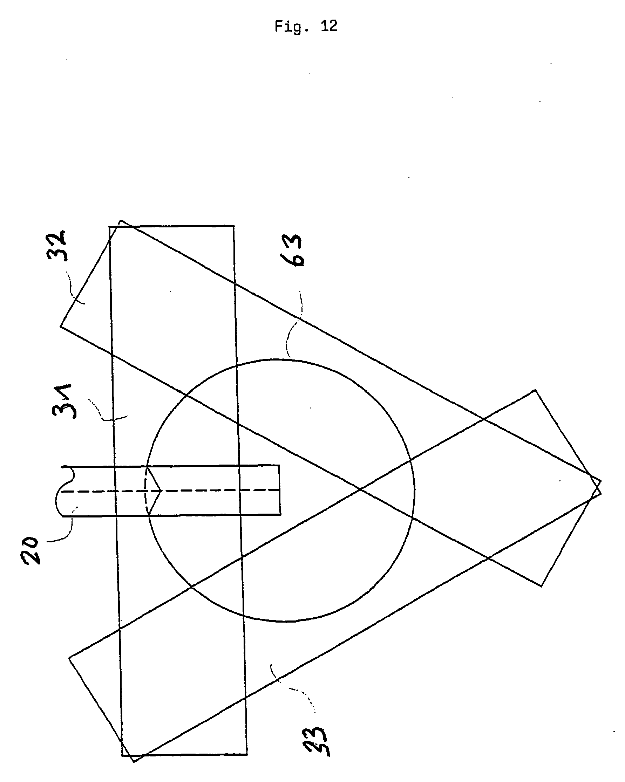

Die Projektionseinrichtungen können sowohl zur dreidimensionalen Lagekorrektur vor dem Dichtmittelauftrag als auch zur Onlinehöhen- und -profilauswertung des Dichtmittelauftrags verwendet werden. Zur dreidimensionalen Lagekorrektur können die Projektionseinrichtungen vorzugsweise mehrere Linien projizieren. Für die Höhenauswertung sollten eine oder mehrere Projektionseinrichtungen vorgesehen sein, die eine Linie oder wie in Fig. 12 dargestellt eine kreisrunde Kontur auf das Bauteil bzw. das Substrat projizieren. Dabei können sich mehrere Linien für die Auswertung als vorteilhaft erweisen.

Wie in Fig. 12 gezeigt, kann auch die Dichtmittelhöhe bzw. Dichtmittelkontur und Dichtmittellage gemäss dem Triangulationsprinzip mittels der Bildverarbeitung gleichzeitig bzw. unmittelbar nach dem Dichtmittelauftrag ermittelt werden. Hierzu wird eine beispielsweise runde Kontur 63 durch die Projektionseinrichtungen auf das Blech 30 aufgebracht, wobei das Dichtmittel bzw. die Dichtmittelspur 20 für eine Höhen-und Lageveränderung der projizierten Kontur 63 sorgt. Diese geänderte runde Projektionskontur 63 wird wiederum von den einzelnen Objektfeldern der einzelnen Kameras ermittelt. Die projizierte Kontur 63 wird dabei durch das Dichtmittel 20 in seiner ursprünglichen Form deformiert, so dass sich daraus die Höhe, Kontur, aber auch die Breite und die Lage des aufgebrachten Dichtmittels 20 gemäss dem Triangulationsprinzip bestimmt werden kann. Bei dem Prinzip der Triangulation liegt zwischen der Kamera und der Projektionseinrichtung ein definierter Winkel vor, wobei die Kamera und die Projektionseinrichtung zueinander kalibriert werden. Durch den Winkel erscheinen die durch die Projektionseinrichtung beleuchteten Substratkonturen je nach Höhe an unterschiedlichen Stellen auf dem lichtempfindlichen Chip bzw. CCD-Chip oder CMOS-Chip der Kamera, so dass durch die Kalibrierung der Kamera und der Projektionseinrichtung die Höhe und Kontur des Dichtmittels errechnet werden kann.

Gemäss einer nicht dargestellten Ausführungsform kann der aus insbesondere drei Kameras aufgebaute Sensor, welcher um die Auftragseinrichtung angeordnet ist, derart aufgebaut sein, dass die optischen Achsen der einzelnen Kameras parallel zueinander ausgerichtet sind, wobei die Kameras insbesondere jeweils senkrecht auf das Substrat bzw. Blech ausgerichtet sind.

Durch eine derartige Anordnung kann der Sensor besonders nah an dem Bereich des Dichtmittelauftrags angeordnet werden, wobei die Sichtbereiche der einzelnen Kameras je nach deren Weitwinkel einen mehr oder weniger grossen Überlappungsbereich aufweisen.

## Patentansprüche

1. Verfahren zum automatischen Aufbringen und Überwachen einer auf einem Substrat (30) aufzubringenden Struktur (20), vorzugsweise einer Kleberraupe oder Kleberspur, wobei
eine Referenzkontur (35) von zumindest einer ersten Kamera (12, 13, 14) in Vorlaufrichtung ermittelt wird, wobei insbesondere eine Bauteilkante vorzugsweise zwischen zwei zu verbindenden Elementen ermittelt wird, um den Verlauf der aufzubringenden Struktur (20) gemäß der Referenzkontur (35) zu regeln, wobei die von der ersten Kamera (12, 13, 14) aufgenommenen Bilder zur Führung einer Auftragseinrichtung (11) für die aufzubringende Struktur (20) verwendet werden,
die aufzubringende Struktur (20) von der Auftragseinrichtung (11) gemäß der von der ersten Kamera (12, 13, 14) ermittelten Referenzkontur (35) auf das Substrat (30) aufgebracht wird,
und die durch die Auftragseinrichtung (11) auf dem Substrat (30) aufgebrachte Struktur (20) durch zumindest eine zweite Kamera (12, 13, 14) in Nachiaufrichtung überwacht wird, **dadurch gekennzeichnet, dass**
drei Kameras (12, 13, 14) verwendetwerden, wobei jede Kamera sowohl für die Regelung in Vorlaufrichtung gemäß der Referenzkontur als auch für die Überwachung der aufgebrachte Struktur in nachlaufrichtung verwendbar ist, wobei jede der Kameras (12, 13, 14) jeweils einen Überlappungsbereich zu den beiden benachbarten Kameras (12, 13, 14) aufweist und dass
synchron zur Überprüfung der aufgetragenen Struktur (20) in Vorlaufrichtung die Referenzkontur (35) von der ersten Kamera (12, 13, 14) zur Regelung des Verlaufs der aufzubringenden Struktur (20) ermittelt wird.

2. Verfahren nach Anspruch 1, **dadurch gekennzeichnet, dass** die Referenzkontur (35) von zumindest zwei Kameras (12, 13, 14) ermittelt wird, um eine dreidimensionale Positionskorrektur für die Auftragseinrichtung (11) mit Hilfe des Stereometrieverfahrens durchzuführen, wobei insbesondere die beiden Kameras (12, 13, 14) das Substrat (30), einen Bauteilabschnitt oder ein oder mehrere Bauteile als Vollbild oder Grossbild aufnehmen, wobei die Vollbilder oder Grossbilder der beiden Kameras (12, 13, 14) einen Überlappungsbereich in Vorlaufrichtung aufweisen, wobei sich die im Überlappungsbereich ergebende dreidimensionale Lageerkennung der Referenzkontur (35) zur Justierung der Auftragseinrichtung (11) vor dem Aufbringen der Struktur (20) verwendet wird.

3. Verfahren nach einem der Ansprüche 1 oder 2 **dadurch gekennzeichnet, dass** eine Projektion zur dreidimensionalen Auswertung auf den Bereich der Referenzkontur (35) aufgebracht wird, insbesondere eine oder mehrere Laserlinien oder eine oder mehrere von zumindest einer LED projizierte Linien als Projektion auf das Substrat (30) aufgebracht werden.

4. Verfahren nach Anspruch 1, **dadurch gekennzeichnet, dass** die Referenzkontur (35) von nur einer ersten Kamera (12, 13, 14) in Vorlaufrichtung zur Regelung des Verlaufes der aufzubringenden Struktur (20) gemäß der Referenzkontur (35) ermittelt wird, und wobei von der ersten Kamera (12, 13, 14) lediglich ein Streifen des Bildes zur Online-Regelung des Auftragens der Kleberstruktur aufgenommen wird, wobei insbesondere von der zweiten Kamera (12, 13,14) lediglich ein Streifen des Bildes zur Online-Überwachung der aufgebrachten Struktur (20) verwendet wird, und wobei die Streifen der Bilder der beiden Kameras (12, 13, 14) unter Bildung einer einzigen Bildsequenz aufgenommen werden und die Bildaufnahmefrequenz entsprechend der Datenverminderung durch die Aufnahme von lediglich einem Streifen des Bildes erhöht wird.

5. Verfahren nach zumindest einem der vorherigen Ansprüche **dadurch gekennzeichnet, dass** eine Parametrierung und eine Aufnahme der Auftragsbahn in einem einzigen Bildaufnahmelauf erfolgt, wobei die Bilder aller Kameras (12, 13, 14) in einer Bildsequenz gespeichert werden, wobei die gespeicherte Bildsequenz für die Parametrierung den Roboterverfahrweg und/oder die Roboterverfahrzeit oder die Roboterkoordinaten, die Position, den Kontrast, den Grauwert oder Farbwert, die Breite und Güte der aufgetragenen Struktur verwendet, und wobei die aufzubringende Struktur (20) durch die Parametrierung im wesentlichen in einer Vektorkette abgelegt wird, wo- bei eine hohe Bildaufnahmefrequenz und kurze Teilabschnitte von im wesentlichen zwischen 0,5 und 4 mm, insbesondere 1 und 3 mm, vorgenommen werden.

6. Verfahren nach einem der vorherigen Ansprüche **dadurch gekennzeichnet, dass** die Winkelwerte der Kreisbahn von 0 bis 360 ein globales Koordinatensystem bilden, wobei den Bildern der einzelnen Kameras (12, 13, 14) ein Segment der Kreisbahn zugeordnet wird.

7. Verfahren nach Anspruch 6 **dadurch gekennzeichnet, dass** bei dem Verlauf der Referenzkontur (35) oder der Kleberspur von einer Kamera (12, 13, 14) zur nächsten Kamera automatisch umgeschaltet wird, wenn der Verlauf der Auftragsstruktur (20) oder der Referenzkontur (35) von dem Segment der Kreisbahn einer Kamera über den Überlappungsbereich in das Segment der Kreisbahn einer anderen Kamera (12, 13, 14) wechselt.

8. Vorrichtung zum automatischen Aufbringen und Überwachen einer auf einem Substrat aufzubringenden Struktur, vorzugsweise einer Kleberraupe oder Kleberspur, zur Durchführung eines Verfahrens gemäss den Ansprüchen 1 bis 7, wobei zumindest ein Beleuchtungsmodul und eine Sensoreinheit vorgesehen ist, wobei die Sensoreinheit aus mindestens zwei Kameras (12, 13, 14) aufgebaut ist, wobei die Kameras (12, 13, 14) um eine Auftragseinrichtung (11) für die aufzubringende Struktur (20) vorgesehen sind und an dieser derart angeordnet sind, dass zumindest eine Kamera (12, 13, 14) in Vorlaufrichtung zur Regelung der Auftragseinrichtung (11) mittels einer Referenzkontur (35) und zumindest eine Kamera (12, 13, 14) in Nachlaufrichtung zur Überwachung der auf dem Substrat aufgebrachten Struktur (20) vorgesehen ist,
**dadurch gekennzeichnet, dass** drei Kameras (12, 13, 14) verwendet werden , wobei jede Kamera sowohl für die Regelung in Vorlaufrichtung gemäß der Referenzkontur als auch für die Überwachung der aufgebrachte Struktur in nachlaufrichtung verwendbar ist, wobei jede der Kameras (12, 13, 14) jeweils einen Überlappungsbereich zu den beiden benachbarten Kameras (12, 13, 14) aufweist und dass synchron zur Überprüfung der aufgetragenen Struktur in Vorlaufrichtung die Referenzkontur (35) von der ersten Kamera (12, 13, 14) zur Regelung des Verlaufs der aufzubringenden Struktur (20) ermittelt wird.

9. Vorrichtung nach Anspruch 8, **dadurch gekennzeichnet, dass** sich die optischen Achsen der einzelnen Kameras (12, 13, 14) in Blickrichtung im wesentlichen mit der axialen Längsachse der Auftragseinrichtung (11) schneiden oder die optischen Achsen der einzelnen Kameras (12, 13, 14) parallel zueinander ausgerichtet sind, und insbesondere senkrecht auf das Substrat (20) ausgerichtet sind, wobei insbesondere die einzelnen Kameras (12, 13, 14), insbesondere drei Kameras, in Umfangsrichtung in jeweils gleichem Abstand voneinander angeordnet sind.

10. Vorrichtung nach einem der Ansprüche 8 oder 9, **dadurch gekennzeichnet, dass** die einzelnen Kameras (12, 13, 14) derart zusammenwirken, dass die Bilder aller Kameras (12, 13, 14) in einer Bildsequenz gespeichert werden, wobei insbesondere von jeder Kamera (12, 13, 14) lediglich ein Streifen des Bildes unter Bildung eines Teils der Bildsequenz aufgenommen wird, wobei die Bildaufnahmefrequenz entsprechend der Datenverminderung durch die Aufnahme von lediglich einem Streifen des Bildes erhöht wird.

11. Vorrichtung nach einem der Ansprüche 8 bis 10, **dadurch gekennzeichnet, dass** eine Projektionseinrichtung an der Auftragseinrichtung (11) vorgesehen ist, welche einen oder mehrere Merkmale, insbesondere Streifen, auf das Substrat (30) für eine dreidimensionale Auswertung projiziert, wobei insbesondere die Projektionseinrichtung eine oder mehre Laserlinien oder eine oder mehrere von zumindest einer LED projizierte Linien zur dreidimensionalen Profilauswertung aussendet, und wobei insbesondere zumindest zwei Projektionseinrichtungen rund um die Auftragseinrichtung (11) angeordnet sind.

12. Vorrichtung nach einem der Ansprüche 8 bis 11, **dadurch gekennzeichnet, dass** die Kameras (12, 13, 14) derart um die Auftragseinrichtung (11) angeordnet sind, dass zumindest eine im wesentlichen kreisförmige Kantenantastung, insbesondere in Form eines Kreiscalipers, gebildet wird, dessen Mittelpunkt die Auftragseinrichtung (11) bildet, wobei insbesondere die Kameras (12, 13, 14) auf einen Kreis um die Auftragseinrichtung (11) ausgerichtet sind, dessen Mittelpunkt im wesentlichen mit dem Mittelpunkt der Auftragseinrichtung (11) übereinstimmt, wobei insbesondere die einzelnen Kameras (12, 13, 14) einen Überlappungsbereich von jeweils 30° bis 90°, insbesondere im wesentlichen 60°, zur nächsten Kamera aufweisen.

13. Vorrichtung nach einem der vorhergehenden Ansprüche 8 bis 12, **dadurch gekennzeichnet, dass** das Beleuchtungsmodul aus LEDs, insbesondere Infrarot-LEDs, UV-LEDs oder RGB-LEDs aufgebaut ist, wobei insbesondere die LEDs geblitzt werden, wobei Stromimpulse von im wesentlichen 1,0 bis 0,01 ms verwendet werden.

14. Vorrichtung nach einem Ansprüche 8 bis 13, **dadurch gekennzeichnet, dass** zur Kalibrierung der einzelnen Kameras (12, 13, 14) für die Zuordnung der Winkelzugehörigkeit eine Kalibriervorrichtung mit einzelnen Formelementen verwendet wird, wobei die Formelemente insbesondere einen Winkelabstand von im wesentlichem 10° aufweisen, wobei insbesondere die Kalibriervorrichtung zumindest drei Markierungsstellen aufweist, die in einem Kreisbogen der Kalibriervorrichtung von im wesentlichen 0°, 120° und 240° angeordnet sind, um drei Kameras (12, 13, 14) zu kalibrieren, wobei sich die Markierungsstellen auf der Kreisbahn in einem Winkelbereich von jeweils im wesentlichen 10 erstrecken, wobei die Markierungsstellen insbesondere durch zumindest zwei Formelemente gebildet werden.

## Claims

1. A method for automatically applying and monitoring a structure (20) to be applied onto a substrate (30), particularly an adhesive bead or adhesive track, wherein
a reference contour (35) is determined in the forward direction by at least one first camera (12, 13, 14) and, in particular, a component edge preferably is determined between two elements to be connected in order to control the profile of the structure (20) to be applied in accordance with the reference contour (35), with the images recorded by the first camera (12, 13, 14) being used for guiding an application device (11) for the structure (20) to be applied,
the structure (20) is applied onto the substrate (30) by the application device (11) in accordance with the reference contour (35) determined by the first camera (12, 13, 14),
and the structure (20) applied onto the substrate (30) by the application device (11) is monitored in the tracking direction by at least one second camera (12, 13, 14), **characterized in that**
three cameras (12, 13, 14) are used, wherein each camera can be used for the control in the forward direction in accordance with the reference contour, as well as for the monitoring of the applied structure in the tracking direction, and wherein each of the cameras (12, 13, 14) respectively has an overlapping region with the two adjacent cameras (12, 13, 14), and **in that**
the reference contour (35) is determined in the forward direction by the first camera (12, 13, 14) in order to control the profile of the structure (20) to be applied synchronously with the check of the applied structure (20).

2. The method according to claim 1, **characterized in that** the reference contour (35) is determined by at least two cameras (12, 13, 14) in order to carry out a three-dimensional position correction of the application device (11) with the aid of a stereometric method, wherein the two cameras (12, 13, 14) particularly record the substrate (30), a component section or one or more components in the form of a complete image or large image, wherein the complete images or large images of the two cameras (12, 13, 14) have an overlapping region in the forward direction, and wherein the three-dimensional position detection of the reference contour (35) resulting in the overlapping region is used for adjusting the application device (11) prior to the application of the structure (20).

3. The method according to one of claims 1 or 2, **characterized in that** a projection is displayed on the region of the reference contour (35) for the three-dimensional evaluation, wherein a projection, in particular, in the form of one or more laser lines or one or more lines projected by at least one LED is displayed on the substrate (30).

4. The method according to claim 1, **characterized in that** the reference contour (35) is determined in the forward direction by only one first camera (12, 13, 14) in order to control the profile of the structure (20) to be applied in accordance with the reference contour (35), wherein only a strip of the image is recorded by the first camera (12, 13, 14) for the online control of the application of the adhesive structure, wherein only a strip of the image is used, in particular, by the second camera (12, 13, 14) for the online monitoring of the applied structure (20), wherein the strips of the images of the two cameras (12, 13, 14) are recorded such that a single image sequence is formed, and wherein the image recording frequency is increased in accordance with the data reduction due to the recording of only a strip of the image.

5. The method according to at least one of the preceding claims, **characterized in that** the application path is parameterized and recorded in a single image recording pass, wherein the images of all cameras (12, 13, 14) are stored in an image sequence, wherein the stored image sequence is used for the parameterization of the robot displacement path and/or the robot displacement time or the robot coordinates, the position, the contrast, the gray scale value, the chromaticity, as well as the width and quality of the applied structure, wherein the structure (20) to the applied is due to the parameterization essentially deposited in the form of a vector string, and wherein a high image recording frequency is realized and short sections between essentially 0.5 and 4 mm, particularly between 1 and 3 mm, are recorded.

6. The method according to one of the preceding claims, **characterized in that** the angular values of the circular path between 0 and 360 form a global coordinate system, wherein a segment of the circular path is assigned to the images of the individual cameras (12, 13, 14).

7. The method according to claim 6, **characterized in that** an automatic change-over from one camera (12, 13, 14) to the next camera takes place along the profile of the reference contour (35) or the adhesive track when the profile of the applied structure (20) or the reference contour (35) changes from the segment of the circular path of one camera into the segment of the circular path of another camera (12, 13, 14) via the overlapping region.

8. A device for automatically applying and monitoring a structure to be applied onto a substrate, preferably an adhesive bead or an adhesive track, particularly for carrying out a method according to claims 1 to 7, wherein at least one lighting module and one sensor unit are provided, wherein the sensor unit is composed of at least two cameras (12, 13, 14), and wherein the cameras (12, 13, 14) are positioned around an application device (11) for the structure (20) to be applied and arranged thereon in such a way that at least one camera (12, 13, 14) is provided for controlling the application device (11) in the forward direction in accordance with a reference contour (35) and at least one camera (12, 13, 14) is provided for monitoring the structure (20) applied onto the substrate in the tracking direction,
**characterized in that** three cameras (12, 13, 14) are used, wherein each camera can be used for the control in the forward direction in accordance with the reference contour, as well as for the monitoring of the applied structure in the tracking direction, and wherein each of the cameras (12, 13, 14) respectively has an overlapping region with the two adjacent cameras (12, 13, 14), and **in that**
the reference contour (35) is determined in the forward direction by the first camera (12, 13, 14) in order to control the profile of the structure (20) to be applied synchronously with the check of the applied structure.

9. The device according to claim 8, **characterized in that** the optical axes of the individual cameras (12, 13, 14) essentially intersect with the axial longitudinal axis of the application device (11) in the viewing direction or the optical axes of the individual cameras (12, 13, 14) are aligned parallel to one another and, in particular, aligned perpendicularly at the substrate (20), wherein the individual cameras (12, 13, 14), particularly three cameras, respectively are arranged equidistantly from one another in the circumferential direction.

10. The device according to one of claims 8 or 9, **characterized in that** the individual cameras (12, 13, 14) cooperate in such a way that the images of all cameras (12, 13, 14) are stored in an image sequence, wherein each camera (12, 13, 14) particularly records only a strip of the image in order to form part of the image sequence, and wherein the image recording frequency is increased in accordance with the data reduction due to the recording of only a strip of the image.

11. The device according to one of claims 8 to 10, **characterized in that** a projection apparatus is provided on the application device (11) and projects one or more features, particularly strips, onto the substrate (30) for a three-dimensional evaluation, wherein the projection apparatus particularly emits one or more laser lines or one or more lines projected by at least one LED for the three-dimensional profile evaluation, and wherein at least two projection apparatuses particularly are arranged around the application device (11).

12. The device according to one of claims 8 to 11, **characterized in that** the cameras (12, 13, 14) are arranged around the application device (11) in such a way that at least one essentially circular edge detection system is formed, particularly in the form of a circular caliber, the center of which is formed by the application device (11), wherein the cameras (12, 13, 14) particularly are aligned on a circle around the application device (11), the center of which essentially coincides with the center of the application device (11), and wherein the individual cameras (12, 13, 14) respectively have an overlapping region with the next camera between 30° and 90°, in particular essentially 60°.

13. The device according to one of preceding claims 8 to 12, **characterized in that** the lighting module is composed of LEDs, particularly infrared LEDs, UV-LEDs or RGB-LEDs, wherein the LEDs particularly are strobed, and wherein current pulses of essentially 1.0 to 0.01 ms are used.

14. The device according to one of claims 8 to 13, **characterized in that** a calibrating device with individual shaped elements is used for calibrating the individual cameras (12, 13, 14) for the allocation of the angular affiliation, wherein the shaped elements particularly have an angular spacing of essentially 10°, wherein the calibrating device particularly features at least three marking points, which are arranged in a circular arc of the calibrating device of essentially 0°, 120° and 240° in order to calibrate three cameras (12, 13, 14), wherein the marking points respectively extend on the circular path in an angular range of essentially 10, and wherein the marking points particularly are formed by at least two shaped elements.

## Revendications

1. Procédé pour appliquer et surveiller de manière automatique une structure (20) à appliquer sur un substrat (30), de préférence sur un cordon de colle ou sur une ligne de colle, dans lequel
un contour de référence (35) est déterminé par au moins une première caméra (12, 13, 14) dans une direction de marche avant, dans lequel en particulier une arête de composant est déterminée de préférence entre deux éléments à relier afin de régler le profil de la structure (20) à appliquer selon le contour de référence (35), dans lequel les images prises par la première caméra (12, 13, 14) sont utilisées afin de guider un dispositif d'application (11) pour la structure (20) à appliquer,
la structure (20) à appliquer est appliquée sur le substrat (30) par le dispositif d'application (11) selon le contour de référence (35) déterminé par la première caméra (12, 13, 14),
et la structure (20) appliquée sur le substrat (30) par le dispositif d'application (11) est surveillée par au moins une deuxième caméra (12, 13, 14) dans la direction de marche à vide, **caractérisé en ce que**
trois caméras (12, 13, 14) sont utilisées, chaque caméra pouvant être utilisée aussi bien pour le réglage dans la direction de marche avant selon le contour de référence que pour la surveillance de la structure appliquée dans la direction de marche à vide,
chacune des caméras (12, 13, 14) présentant respectivement une zone de chevauchement menant aux deux caméras (12, 13, 14) adjacentes,
et que le contour de référence (35) est déterminé par la première caméra (12, 13, 14) pour régler le profil de la structure (20) à appliquer de manière synchrone par rapport à la surveillance de la structure (20) appliquée dans la direction de marche avant.

2. Procédé selon la revendication 1, **caractérisé en ce que** le contour de référence (35) est déterminé par au moins deux caméras (12, 13, 14) afin d'effectuer une correction de position tridimensionnelle pour le dispositif d'application (11) à l'aide du procédé de stéréométrie, dans lequel en particulier les deux caméras (12, 13, 14) prennent en plein écran ou en grand écran le substrat (30), une section du composant ou un ou plusieurs composants, dans lequel les images en plein écran ou les images en grand écran des deux caméras (12, 13, 14) présentent une zone de chevauchement dans la direction de marche avant, dans lequel l'identification de position tridimensionnelle, résultante dans la zone de chevauchement, du contour de référence (35) est utilisée afin d'ajuster le dispositif d'application (11) avant l'application de la structure (20).

3. Procédé selon l'une quelconque des revendications 1 ou 2, **caractérisé en ce qu'**une projection pour l'évaluation tridimensionnelle est appliquée sur la zone du contour de référence (35), en particulier **en ce qu'**une ou plusieurs lignes laser ou une ou plusieurs lignes projetées sont appliquées par au moins une DEL en tant que projection sur le substrat (30).

4. Procédé selon la revendication 1, **caractérisé en ce que** le contour de référence (35) est déterminé par uniquement une première caméra (12, 13, 14) dans la direction de marche avant afin de régler le profil de la structure (20) à appliquer selon le contour de référence (35), et dans lequel seulement une bande de l'image pour régler en ligne l'application de la structure de colle est prise par la première caméra (12, 13, 14), dans lequel en particulier seulement une bande de l'image pour surveiller en ligne la structure (20) appliquée est utilisée par la deuxième caméra (12, 13, 14), et dans lequel les bandes des images des deux caméras (12, 13, 14) sont prises en formant une unique séquence d'images et que la fréquence de prise d'images est augmentée conformément à la réduction de données par la prise de seulement une bande de l'image.

5. Procédé selon au moins l'une quelconque des revendications précédentes, **caractérisé en ce qu'**un paramétrage et une prise du ruban d'application sont effectués dans un mode unique de prise d'images, dans lequel les images de toutes les caméras (12, 13, 14) sont mémorisées dans une séquence d'images, dans lequel la séquence d'images mémorisée utilise pour le paramétrage le trajet de déplacement de robot et/ou le temps de déplacement de robot ou les coordonnées de robot, la position, le contraste, le niveau de gris ou le niveau de couleur, la largeur et la qualité de la structure appliquée, et dans lequel la structure (20) à appliquer est déposée par le paramétrage sensiblement dans une chaîne de vecteur, dans lequel une fréquence de prise d'images élevée et de courtes sections partielles sensiblement entre 0,5 et 4 mm, en particulier entre 1 et 3 mm, sont réalisées.

6. Procédé selon l'une quelconque des revendications précédentes, **caractérisé en ce que** les valeurs angulaires de la trajectoire circulaire de 0 à 360 forment un système global de coordonnées, dans lequel un segment de la trajectoire circulaire est associé aux images des diverses caméras (12, 13, 14).

7. Procédé selon la revendication 6, **caractérisé en ce qu'**on passe automatiquement d'une caméra (12, 13, 14) à la caméra qui suit le long du contour de référence (35) ou de la ligne de colle quand le profil de la structure d'application (20) ou du contour de référence (35) bascule du segment de la trajectoire circulaire d'une caméra dans le segment de la trajectoire circulaire d'une autre caméra (12, 13, 14) en passant par la zone de chevauchement.

8. Dispositif pour appliquer et surveiller de manière automatique une structure à appliquer sur un substrat, de préférence sur un cordon de colle ou sur une ligne de colle, pour la mise en oeuvre d'un procédé selon les revendications 1 à 7, dans lequel au moins un module d'éclairage et une unité de capteur sont prévus, dans lequel l'unité de capteur est composée d'au moins deux caméras (12, 13, 14), dans lequel les caméras (12, 13, 14) sont prévues autour d'un dispositif d'application (11) pour la structure (20) à appliquer et sont disposées de telle manière au niveau de cette dernière qu'au moins une caméra (12, 13, 14) est prévue dans la direction de marche avant afin de régler le dispositif d'application (11) au moyen d'un contour de référence (35) et qu'au moins une caméra (12, 13, 14) est prévue dans la direction de marche à vide afin de surveiller la structure (20) appliquée sur le substrat,
**caractérisé en ce que** trois caméras (12, 13, 14) sont utilisées, chaque caméra pouvant être utilisée aussi bien pour le réglage dans la direction de marche avant selon le contour de référence que pour la surveillance de la structure appliquée dans la direction de marche à vide, chacune des caméras (12, 13, 14) présentant respectivement une zone de chevauchement menant aux deux caméras (12, 13, 14) adjacentes, et que
le contour de référence (35) est déterminé par la première caméra (12, 13, 14) pour régler le profil de la structure (20) à appliquer de manière synchrone par rapport à la surveillance de la structure appliquée dans la direction de marche avant.

9. Dispositif selon la revendication 8, **caractérisé en ce que** les axes optiques des diverses caméras (12, 13, 14) coupent dans la direction d'observation sensiblement l'axe longitudinal axial du dispositif d'application (11), ou que les axes optiques des diverses caméras (12, 13, 14) sont orientés de manière parallèle les uns par rapport aux autres, et sont orientés en particulier de manière perpendiculaire sur le substrat (20), en particulier les diverses caméras (12, 13, 14), en particulier les trois caméras, sont disposées à une distance respectivement identique les unes des autres dans la direction périphérique.

10. Dispositif selon l'une quelconque des revendications 8 ou 9, **caractérisé en ce que** les diverses caméras (12, 13, 14) coopèrent de telle manière que les images de toutes les caméras (12, 13, 14) sont mémorisées dans une séquence d'images, dans lequel en particulier seulement une bande de l'image est prise en formant une partie de la séquence d'images par chaque caméra (12, 13, 14), dans lequel la fréquence de prise d'images est augmentée conformément à la réduction de données par la prise de seulement une bande de l'image.

11. Dispositif selon l'une quelconque des revendications 8 à 10, **caractérisé en ce qu'**un dispositif de projection est prévu au niveau du dispositif d'application (11), lequel projette une ou plusieurs caractéristiques, en particulier des bandes, sur le substrat (30) pour une évaluation tridimensionnelle, dans lequel en particulier le dispositif de projection envoie une ou plusieurs lignes laser ou une ou plusieurs lignes projetées par au moins une DEL aux fins de l'évaluation de profil tridimensionnelle, et dans lequel en particulier au moins deux dispositifs de projection sont disposés tout autour du dispositif d'application (11).

12. Dispositif selon l'une quelconque des revendications 8 à 11, **caractérisé en ce que** les caméras (12, 13, 14) sont disposées de telle manière autour du dispositif d'application (11) qu'au moins un palpage d'arête présentant une forme sensiblement circulaire, en particulier sous la forme d'un étrier circulaire, est formé, dont le milieu forme le dispositif d'application (11), dans lequel en particulier les caméras (12, 13, 14) sont orientées sur un cercle autour du dispositif d'application (11) dont le milieu coïncide sensiblement avec le milieu du dispositif d'application (11), dans lequel en particulier les diverses caméras (12, 13, 14) présentent une zone de chevauchement allant respectivement de 30° à 90°, en particulier de sensiblement 60° menant à la caméra qui suit.

13. Dispositif selon l'une quelconque des revendications précédentes 8 à 12, **caractérisé en ce que** le module d'éclairage est composé de DEL, en particulier de DEL infrarouges, de DEL à UV ou de DEL RJB, dans lequel en particulier les DEL sont flashées, dans lequel des impulsions de courant allant sensiblement de 1,0 à 0,01 ms sont utilisées.

14. Dispositif selon l'une quelconque des revendications 8 à 13, **caractérisé en ce qu'**un système de calibrage comprenant divers éléments moulés est utilisé afin de calibrer les diverses caméras (12, 13, 14) pour l'association de l'appartenance angulaire, dans lequel les éléments moulés présentent en particulier une distance angulaire de sensiblement 10°, dans lequel en particulier le système de calibrage présente au moins trois emplacements de marquage, qui sont disposés dans un arc de cercle du dispositif de calibrage de sensiblement 0°, 120° et 240° afin de calibrer trois caméras (12, 13, 14), dans lequel les emplacements de marquage s'étendent sur la trajectoire circulaire dans une plage angulaire respectivement de sensiblement 10, dans lequel les emplacements de marquage sont formés en particulier par au moins deux éléments moulés.
